# EUROPEAN PATENT SPECIFICATION

(11) **EP 2 220 971 B1**
(45) Date of publication and mention of the grant of the patent: **15.02.2017**
(21) Application number: 08792493.2
(22) Date of filing: 08.08.2008
(51) Int. Cl.: A47J 31/06, A47J 31/24

(54) **TEA LEAF FILTER TO BE USED IN COFFEE EXTRACTOR**
IN KAFFEEEXTRAHIERVORRICHTUNG VERWENDBARER FILTER FÜR LOSEN TEE
FILTRE À FEUILLES DE THÉ DESTINÉ À ÊTRE UTILISÉ DANS UN APPAREIL À CAFÉ

(30) Priority: 28.11.2007 JP 2007306971
(43) Date of publication of application: 25.08.2010
(73) Proprietor: SS&W Japan, Tokyo150-0014 (JP)
(72) Inventor: SAITO, Shojiro, Minato-ku Tokyo 105-0014 (JP)
(74) Representative: Hooiveld, Arjen Jan Winfried
(86) International application number: PCT/JP2008/064616
(87) International publication number: WO 2009/069341

(56) References cited:
- EP-A1- 0 309 708
- EP-A2- 0 760 222
- DE-A1- 4 135 660
- DE-A1-102005 057 691
- GB-A- 2 386 543
- JP-A- 2007 018 430
- JP-A- 2007 038 004
- JP-A- 2007 075 575
- JP-U- 57 124 332

## Description

### Field of the Invention

The present invention relates to a filter for tea leaves used in a coffee extractor. In detail, the present filter for tea leaves is used in the coffee extractor, and thereby tea such as high concentrated tea which can create latte art can be extracted in a short time. Here, the coffee extractor is, for example, a conventional espresso machine which can extract coffee such as espresso coffee by applying pressure which is higher than atmospheric pressure.

### Background of the Invention

It is widely performed to coercively extract coffee by using an exclusive apparatus called an espresso machine as shown in, for example, Japanese Examined Patent Application Publication No. 6-71453 or in European Application Publication No. 0 309 708. And the exclusive apparatus has the following process, and coffee such as espresso cof fee is obtained by going through the following process. The process is that, first of all, coffee beans are stuffed in a cup-shaped metallic filter. Here, the coffee beans are roasted deeply and ground to fine powder. Thereafter, the pressure which is higher than one atmosphere (atmospheric pressure) is applied to the coffee beans within the filter so as to coercively extract about one ounce (30 ml) of coffee by using boiling water of about 90°C and taking an extraction time between 20 seconds and 25 seconds. Here, the pressure which is higher than one atmosphere (atmospheric pressure) is usually about 9 atmospheres. And, coffee extracted by using coffee beans between 7 grams and 10 grams is called single espresso.

In order to extract coffee such as espresso or the like by an espresso machine, first of all, coffee beans are stuffed in a metallic filter. Here, coffee beans are ground to fine powder for espresso. And the grounds of coffee are uniformly pressed into the metallic filter with a utensil called a tamper. This work is referred to as tamping. And then, the metallic filter is set to a handle. And thereafter, the metallic filter and the handle are mounted to the espresso machine. In this way, coffee is coercively extracted by applying high pressure (generally 9 atmospheres).

Recently, a latte art is becoming increasingly popular. Here, the latte art is to create designs to the surface of the coffee such as espresso coffee or the like by using milk which is whipped. Hereinafter, the whipped milk is called "foamed milk" in this description. Further, patterns of heart-shape, leaf-shape or the like are adopted as the designs. Furthermore, the latte art is also called coffee art, foamed art, or the like.

So, it is tried to create the latte art to tea such as royal milk tea, spiced tea, or the like. In other words, it is tried to extract tea by using the same extraction method as the extraction method of coffee. That is, the same metallic filter as coffee is used, and tea leaves are stuffed in the metallic filter. Here, the tea leaves are crashed into small pieces so that the tea leaves become of a similar size to the coffee beans used in an espresso machine. And, the tea is extracted by performing tamping. In this way, the extraction time of the tea take less than 5 seconds. As a result, color of the extracted tea was light, and taste of the extracted tea was weak. Therefore, it is not possible to create the latte art on the surface of such tea even if the foamed milk is poured. It is attributed to the following facts. That is, the tea leaves such as a black tea leaves are made by drying the leaves, unlike the coffee beans. The reason is that the tea leaves absorb the water content, and the tea leaves expand so as to restore to their original state, when boiling water is poured in the metallic filter. Further, another reason is that since the tea leaves are leaves, the tea leaves are of planar shape even if the tea leaves are crashed into small pieces. In addition to these, another reason is that the specific weight of the tea leaves is lower than the specific weight of coffee beans. In other words, since coffee beans are seeds, the coffee beans are a three-dimensional shape even if the coffee beans are ground to fine powder. In addition to this, since the coffee beans contain to some extent a water content such as oil content, the coffee beans hardly expand even if boiling water is poured in the metallic filter. Therefore, high pressure, which spouted from the espresso machine or the like, can be effectively applied to the coffee beans. On the other hand, the tea leaves have a planar shape, and the tea leaves expand when boiling water is poured into the filter with the tea leaves, further, a weight of the tea leaves are low. For these reason, if fluid of water, which have the momentum of about 9 atmospheres, is poured into the filter, the tea leaves move within the filter. As a result, the pressure escapes outside the filter, thereby it is not possible to maintain the high pressure of 9 atmospheres within the filter. Consequently, since the extraction time of tea is made short, it is considered that it becomes difficult to achieve an effect of "brewing" . Therefore, it is considered that the tea, which color is light and taste is weak, is extracted. Further, the tea leaves such as black tea or the like are dry. Therefore, when the tamping is performed, the tea leaves are broken by applying force. And fine powders of tea leaves are generated. As a result, there was problem that many fine powders float on the extracted tea. In addition to this, there also was the problem that fine powders precipitate in the extracted tea. Furthermore, the fine powders are of bitter or other unpleasant taste (that detracts from the flavor of a drink). However, in case that the effect of the tamping is not achieved, gaps generate among the tea leaves. Consequently, since the pressure, which is applied from the espresso machine, escapes outside the filter, it is not possible to apply the pressure to the tea leaves effectively. Therefore, it is not possible to extract high concentrated tea effectively in a short time.

Further, in case that the particle size of the tea leaves was made even smaller, there was the following problem. That is, the problem is that in case that tea was extracted with the espresso machine by using the metallic filter for espresso (for coffee), the tea leaves pass through the holes provided in the metallic filter for espresso (for coffee).

Furthermore, in case that the coffee such as espresso coffee or the like is extracted, components such as caffeic acid, chlorogenic acid, amino acid, or the like appear by extracted ground coffee beans with espresso machine at about 9 atmospheres. Thereafter, when the extracted coffee is returned to one atmosphere (atmospheric pressure), a cavitation effect is generated. Therefore, above components become air bubbles, and these air bubbles float on the surface of the coffee such as espresso coffee or the like. As a result, it becomes easy to create the latte art on the surface of coffee such as espresso, or the like. However, tea does not have the components such as caffeic acid, chlorogenic acid, or the like. However, it was found that it is possible to create the latte art on the surface of the tea by the following components in tea and the cavitation effect. Here, the components in tea are closely similar to above-mentioned components on coffee. Specifically, the components in tea are tannin, amino acid, or the like. However, in case that tannin is put into a mouth, it gives a strong astringency. Therefore, in case that the amount of tannin contained in tea is too large, it is possible to create the latte art on the surface of the tea. However, there is a problem that it is not possible to drink deliciously.

### Summary of the Invention

The present invention has been made under the circumstances as described above. An object of the present invention is to provide a filter- for tea leave s which can be used in a coffee extractor such as a conventional espresso machine. In this way/ it is possible to extract a high concentrated tea in a short time. The high concentrated tea is such that the amount of the contents such as tannin, caffeine, or the like is not so high. In addition, it is possible to create the latte art to the surface of the extracted high concentrated tea.

The above-described object of the present invention can be achieved by providing a filter for tea leaves used in a coffee extractor for extracting coffee by applying pressure higher than atmospheric pressure, characterized in that; a thickness of a bottom of the filter is between 200 µm and 290 µm; holes which pass extracted liquid are formed to the bottom of the filter so that sum of top openings areas of the holes is between 0.2% and 1% of area of the bottom of the filter; topped diameter of the hole is between 170 µm and 210 µm, a bottom diameter of the hole is between 210 µm and 250 µm, and a cross-sectional shape of the hole is tapered shape which topped diameter of the hole is smaller than the bottom diameter of the hole; and the holes are formed on circumferences of a plurality of concentric circles centering a central point of the bottom of the filter; and the distances between the adjacent holes formed on circumference of the same concentric circle are the same length, and the larger the radius of the concentric circle becomes, the longer the distance between the adjacent holes becomes.

Further, the above-described object of the present invention can be achieved effectively by providing the filter for tea leaves, wherein a topped inner diameter is between 56 mm and 58 mm; an inner diameter of the bottom is between 20 mm and 34 mm; a depth is between 18 mm and 23 mm; a volume is between 27 cm3 and 30 cm3; and number of the holes are between 280 and 500.

### Effect of the Invention

According to the filter for tea leaves used in a coffee extractor in accordance with the present invention, the thickness of the bottom of the filter is specified. In addition to this, the number of the hole s madein the bottom of the filter, the shape of the holes made in fche bottom of the filter, and the formed pattern of the holes made the bottom of the filter are also specified. As a result, high concentrated tea such as high concentrated black tea, which contains appropriate amounts of tannin, amino acid, or the like, can be extracted in a short time. Therefore, it becomes possible to create latte art by pouring foamed milk on the surface of the tea such as black tea or the like as well as the case of espresso coffee.

### Brief Description of the Drawings

Fig. 1 is a schematic view of a coffee extractor in a state in which a filter for tea leaves in accordance with the present invention is used.
Fig . 2 is a perspective view of a filter for tea leaves and a handle in accordance with the present invention.
Fig. 3 is a plan view showing a pattern of holes formed in a filter for tea leaves in accordance with the present invention.
Fig. 4 is a partial cross-sectional view of the bottom of a filter for tea leaves in accordance with the present invention.
Fig. 5 is a plan view showing another pattern of holes formed in a filter for tea leaves in accordance with the present invention.

### Best Modes for Carrying Out the Invention

Hereinafter, a filter for tea leaves used in a coffee extractor according to the present invention will be described in detail with reference to the drawings. The coffee extractor such as espresso machine or the like coercively extract high concentrated coffee such as espresso or the like by applying pressure higher than atmospheric pressure (one atmosphere). Therefore, hereinafter, in description, the coffee extractor is called the "espresso machine". Further, it is needless to say that the present invention should not be limited to the following embodiments. That is, the present invention can be altered without departing from the scope of the claims.

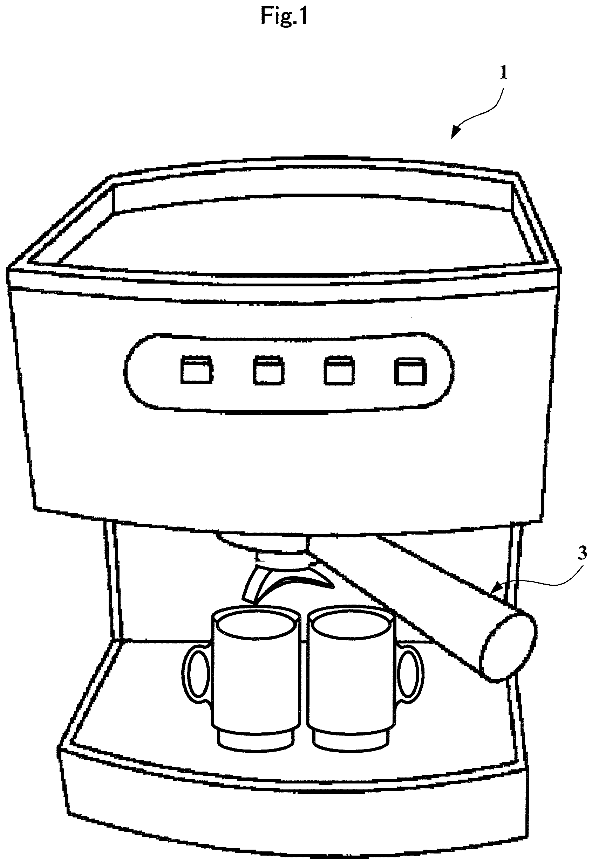

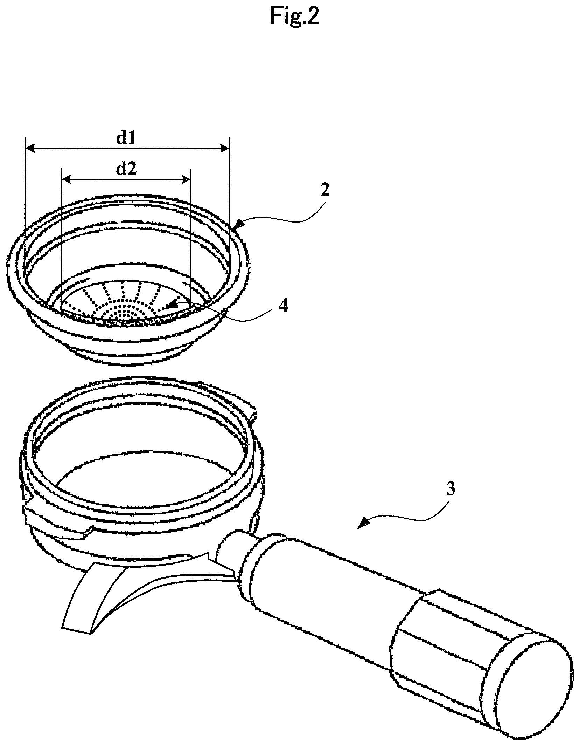

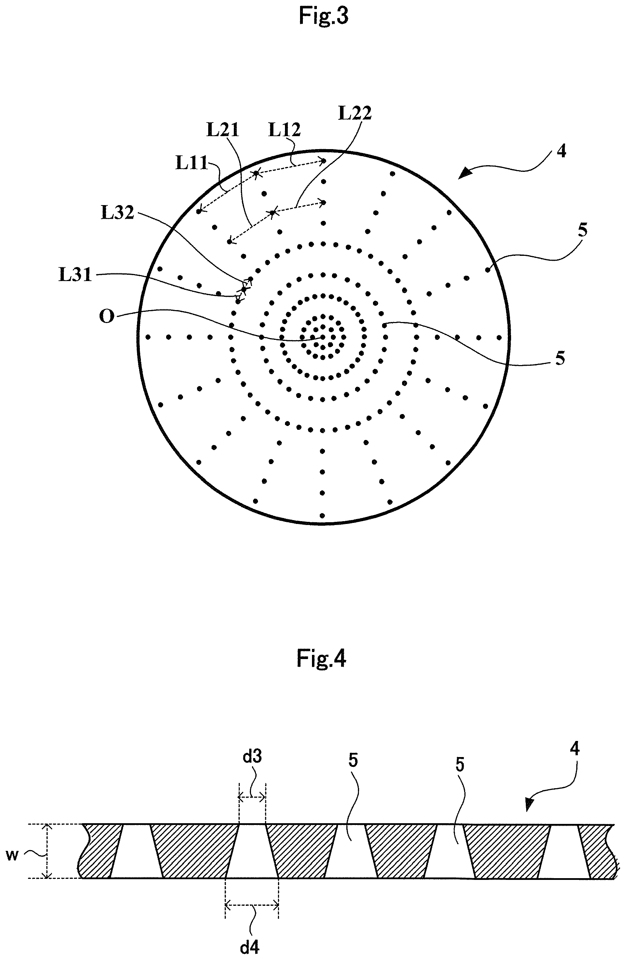

Fig. 1 is a schematic view showing an espresso machine 1 when a filter for tea leaves used in the espresso machine in accordance with the present invention is used. Hereinafter, the filter for tea leaves used in the espresso machine in accordance with the present invention is referred to as the "present filter for tea leaves". And Fig. 2 is a schematic perspective view of the present filter for tea leaves 2 and a handle 3. Here, the present filter for tea leaves 2 is mounted to the handle 3. Further, Fig. 3 is a schematic top view of a bottom 4 of the present filter for tea leaves 2. Furthermore, Fig. 4 is a partial cross-sectional view of the bottom 4 of the present filter for tea leaves 2. As shown in Fig.4, taper-shaped holes 5 are formed in the bottom 4 of the present filter for tea leaves 2. Here, the taper-shaped holes 5 are used to pass liquid extracted from tea leaves.

As shown in Fig. 2, the present filter for tea leaves 2 is formed as follows. That is, the top inner diameter d1 of the present filter for tea leaves 2 is between 56 mm and 58 mm, the inner diameter d2 of the bottom 4 of the present filter for tea leaves 2 is between 20mm and 34 mm, the depth of the present filter for tea leaves 2 is between 18 mm and 23 mm, and the volume of the present filter for tea leaves 2 is between 27 cm³ and 30 cm³. However, the size of the present filter for tea leaves 2 should not be particularly limited. That is, the size of the present filter for tea leaves 2 may be appropriately altered according to the shape of the handle 3 or the like. As mentioned above, in case that the depth of the present filter for tea leaves 2 is set to between 18 mm and 23 mm, high concentrated tea can be easily extracted. That is to say, if the filter for tea leaves has the same volume, the bottom inner diameter d2 of the filter for tea leaves is set smaller, and the depth of the filter for tea leaves is set larger. As a result, high pressure generated by the espresso machine 1 can be maintained more easily. Consequently, it is possible to apply higher pressure to tea leaves within the filter, and it is possible to extract high concentrated tea.

Further, as will be described later, tea leaves of the amount between about 7.5 grams and about 9 grams are stuffed within the present filter for tea leaves 2. Therefore, when the volume of the present filter for tea leaves 2 is set to between 27 cm³ and 30 cm³, preferably between 27.04 cm³ and 30.00 cm³, it is possible to achieve the same effect as the tamping effect for coffee. In more detail, in case that a particle size of the tea leaves is about 200 µm, a volume of 1 gram of tea leaves is 2.322 cm³. Therefore, a volume of 7.5 grams of tea leaves is 17.415 cm³, and a volume of 9 grams of tea leaves is 20.898 cm³. And, when the tea leaves expand by pouring the boiling water, the volume of the tea leaves after expanding becomes between about 1.3 times and about 1.66 times as compared with each volume of the tea leaves before expanding. That is, in case that the volume of the present filter for tea leaves 2 is set to between 27 cm³ and 30 cm³, when boiling water is poured in the present filter for tea leaves 2 and the tea leaves expand, it is possible to fill the present filter for tea leaves 2 with the tea leaves. Therefore, since it comes to prevent the pressure from escaping, it becomes possible to brew the tea leaves effectively. As a result, it is possible to extract high concentrated tea in a short time by achieving the same effect as the tamping effect for coffee.

Here, in case that the volume of the present filter for tea leaves 2 is less than 27 cm³, there is the risk that the extraction of the tea is prevented. In more details, if tea leaves of the amount between about 7.5 grams and about 9 grams are stuffed within the filter such that the volume is less than 27 cm³, it causes the following problem by pouring boiling water in the filter. That is, the tea leaves expand by pouring boiling water in the filter. Therefore, the problems cause that the tea leaves overflow from the filter, or the filter is filled excessively with the tea leaves. As a result, the pressure generated by the espresso machine is completely cut off by the tea leaves within the filter. Therefore, there is a risk that the extraction of the tea is prevented. On the other hand, in case that the volume of the present filter for tea leaves 2 is over 30 cm³, it is not possible to fill the filter with the tea leaves. Therefore, it is not possible to achieve the tamping effect sufficiently.

Further, although the thickness of the bottom of a single filter for extract espresso is normally about 0.4 mm (400 µm), the thickness w of the bottom 4 of the present filter for tea leaves 2 is between 200 µm and 290 µm. In case that the thickness w of the bottom 4 of the present filter for tea leaves 2 is less than 200 µm, the bottom of the tea filter is broken. That is, in case that the high pressure is applied to the filter in order to extract the tea, the bottom of the tea filter cannot withstand the high pressure. As a result, the bottom of the tea filter will break. On the other hand, in case that the thickness w of the bottom 4 of the present filter for tea leaves 2 is over 290 µm, the thickness of the bottom of the filter is too thick. For this reason, it is difficult to remove tea leaves clogged in the holes formed in the filter.

The holes 5 are formed to the present filter for tea leaves 2 so that the sum of the top opening areas of the holes 5 is between 0.2% and 1% of the area of the bottom 4 of the present filter for tea leaves 2. In this way, since the present filter for tea leaves 2 reduces the top opening area of the holes 5 as compared with a filter for coffee, it is possible to produce resistance to the passage of water. As a result, it becomes possible to apply the pressure to the tea leaves effectively.

Specifically, as described above, in case that the inner diameter d2 of the bottom 4 of the present filter for tea leaves 2 is 30 mm, the number of the holes 5 formed to the bottom 4 of the present filter for tea leaves 2 is between 280 and 500, preferably between 290 and 480, more preferably between 300 and 400. More specifically, in case that the inner diameter d2 of the bottom 4 of the present filter for tea leaves 2 is 20 mm, the number of the holes 5 formed to the bottom 4 of the present filter for tea leaves is between 300 and 400. Further, in case that the inner diameter d2 of the bottom 4 of the present filter for tea leaves 2 is 34 mm, the number of the holes 5 formed to the bottom 4 of the present filter for tea leaves is between 300 and 500. Here, in case that the number of the holes 5 formed to the bottom 4 of the present filter for tea leaves 2 is less than 280, the number of the holes 5 is too few. As a result, since the extraction time becomes long, the amount of components contained in extracted tea increases. Here, in case that the extracted tea is black tea, the components are caffeine and tannin. On the other hand, if the number of the holes 5 formed to the bottom 4 of the present filter for tea leaves 2 is over 500, the number of the holes 5 is too large. As a result, since the extraction time becomes short, the color of the extracted tea becomes light. Therefore, it is difficult to create the latte art to the surface of the extracted tea. In addition to this, the taste of the extracted tea is weak. Here, in case that high concentrated tea is extracted by using the present filter for the tea leaves 2 in the espresso machine 1, the extraction time is preferably between 20 seconds and 60 seconds, more preferably between 25 seconds and 40 seconds. The espresso machine 1 is widely and generally distributed machine. In case that the extraction time is less than 20 seconds, the effect of "brewing" is insufficient. As a result, the color of the extracted tea is light, and the taste of the extracted tea is weak. On the other hand, in case that the extraction time is over 40 seconds, high pressure is applied to the tea leaves for a long time, in addition to this, the tea leaves are brewed with high-temperature boiling water for a long time. As a result of this, there is a risk that the tea leaves deteriorate.

Further, as shown in Fig. 4, the cross-sectional shape of the holes 5 formed to the bottom 4 of the present filter for tea leaves 2 is a tapered shape. In detail, the tapered shape is that the top diameter d3 of the holes 5 is smaller than the bottom diameter d4 of the holes 5. In this way, since the cross-sectional shape of the holes 5 is tapered shape, it is possible to apply the pressure to the tea leaves effectively. As a result of this, it is possible to extract high concentrated tea in a short time.

Here, the top diameter d3 of the holes 5 formed to the present filter for tea leaves 2 is between 170 µm and 210 µm, and the bottom diameter d4 of the holes 5 is between 210 µm and 250 µm, preferably between 210 µm and 240 µm, and more preferably 220 µm. And thus, since the present filter for tea leaves 2 makes the size of the holes 5 smaller, it is possible to brew the tea leaves for a longer time. Further, it is possible to prevent fine powder of the tea leaves from mixing into extracted liquid. Furthermore, the high pressure from the espresso machine 1 can be more easily applied to the tea leaves within the filter 2. In addition, since the speed of running water from within the filter, which the high pressure of about 9 atmospheres is applying, to outside of the filter, which is atmospheric pressure, is higher, it is easier to achieve the cavitation effect. Therefore, even if the tea leaves, which oil content is lower as compared with the coffee beans, is used, it is easy to form air bubbles population called crema on the surface of the extracted tea. As a result of this, it is more easy to create the latte art to the extracted tea. Here, crema is a membrane made by tannin, acid, and protein.

In case that the top diameter d3 of the holes 5 is less than 170 µm, the holes 5 are too small. For this reason, since expanded tea leaves by brewing is clogged in the hole 5, it is difficult to extract tea. Further, even if high concentrated tea is extracted, the extraction time becomes long. Therefore, the problems are generated that the amount of caffeine is so much. Further, a large amount of fine powder of the tea leaves, which are bitter or of other unpleasant taste (that detracts from the flavor of a drink), is generated. On the other hand, in case that the top diameter d3 of the holes 5 is over 210 µm, the extraction time of tea becomes too short. As a result of this, since the amount of tannin contained in the extracted tea lessens, the color of the extracted tea is light. Therefore, it is difficult to create the latte art to the extracted tea. In addition to this, the taste of the extracted tea becomes weak. Furthermore, in case that the bottom diameter d4 of the holes 5 is less than 210 µm, it is difficult to achieve the effect that the cross-sectional shape of the holes 5 is made tapered shape. On the other hand, in case that the bottom diameter d4 of the holes 5 is over 250 µm, the filter cannot withstand the high pressure applied at the time of extraction the tea. Therefore, there is a risk that the filter may break.

Further, as shown in Fig. 3, the holes 5 formed to the bottom 4 of the present filter for tea leaves 2 are formed on the circumferences of a plurality of concentric circles. Here, concentric circles are circles centering on the central point O of the bottom 4 of the present filter for tea leaves 2. And, as shown in Fig. 3, in the present filter for tea leaves 2, it is designed so that the distances between the adjacent holes 5, 5 formed on circumference of the same concentric circle are the same length. In other words, for example, it is designed so that L11 and L12 are the same length, L21 and L22 are the same length, and L31 and L32 are the same length. In addition, it is designed so that the longer the distance from the central point O becomes, in other words, the larger the radius of the concentric circle becomes, the longer the distance between the adjacent holes 5, 5 becomes. Further, it is designed so that the holes 5 are formed densely as the distance from the central point O is shorter. In other words, the smaller the radius of the concentric circle becomes, the shorter the distance between the adjacent holes 5, 5 becomes. The pressure spouted from the espresso machine 1 is higher as go inward to the center of the filter 2. Therefore, like this, since it makes that the formed pattern of the holes 5 in which the holes 5 are formed more concentratedly at the part near the central point O of the present filter for tea leaves 2, it is possible to apply the pressure to the black tea leaves effectively.

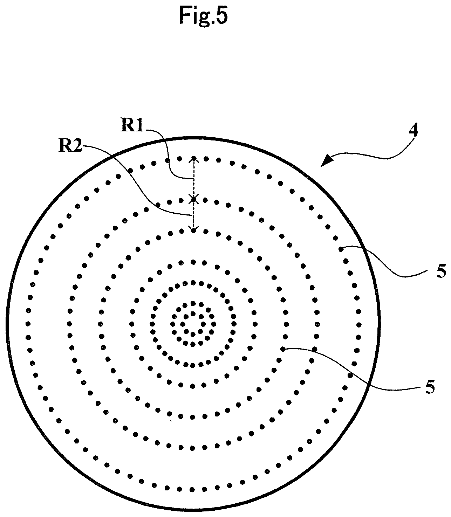

Further, the formation pattern of the holes 5 formed to the bottom 4 of the present filter for tea leaves 2 is not limited to the hole formation pattern shown in Fig. 3. That is, in addition to this, for example, it can employ the formation pattern of the holes as shown in Fig. 5. That is, as shown in Fig. 5, it is designed so that the shortest distance between the adjacent concentric circles becomes longer as going outward of the filter. In other words, for example, it is designed so that R2 shown in Fig.5 is longer than R1 shown in Fig.5. If the formation pattern as shown in Fig.5 is employed, it becomes possible to densely form the holes 5 near the central point O. Therefore, the formation pattern as shown in Fig.5 is preferable, too.

Further, the present filter for tea leaves 2 can employ the various metallic filters which made with similar material to a conventional metallic filter for coffee. However, in order to reduce that the chemical reactions initiate by bonding between the components such as tannin or the like contained in the extracted tea and metallic ions such as iron, it is most preferable that the present filter for tea leaves 2 is made of stainless steel.

Further, holes are not formed in the lateral side of the present filter for tea leaves as well as the case of a conventional metallic filter for coffee. And the lateral side of the present filter for tea leaves 2 is formed into a step-like shape by forming one or two steps. As a result, it is possible to prevent the pressure applied by the espresso machine 1 from escaping. Therefore, it is possible to extract high concentrated tea more reasonably.

Further, as shown in Fig. 1 and Fig. 2, the double size handle is used as a handle 3. Here, double size handle is the handle that can extract two cups of espresso in one time. Here, the amount of tea leaves packed in a general tea bag is normally about 2 grams. On the other hand, in case that black tea leaves are used as tea leaves, the amount of tea leaves used in the present filter for tea leaves 2 is between 7.5 grams and 9 grams. That is, the amount of tea leaves used in the present filter for tea leaves 2 are more than three times as compared with the tea bag. In addition to this, a tea bag employs the manner of a so-called infusion. That is, tea leaves packed in tea bag is put into the teapot or teacup. And, boiling water is poured into the teapot or the like, and then tea is extracted by brewing the tea leaves in the teapot or the like.

On the other hand, the present filter for tea leaves 2 is used in the coercive extraction by applying high pressure higher than atmospheric pressure using a coffee extractor such as the espresso machine 1. Therefore, in case that the amount of caffeine is compared, the black tea extracted by tea bag and the high concentrated black tea coercively extracted by applying high pressure higher than atmospheric pressure with the espresso machine 1 using the present filter for tea leaves 2, the amount of caffeine in the high concentrated black tea coercively extracted using the present filter for tea leaves 2 is higher than the black tea extracted by tea bag even for the same volume of 30 cc. It is estimated that the amount of caffeine in the high concentrated tea coercively extracted by using espresso machine 1 is double or more as compared with the black tea extracted by infusion. For this reason, even if a single filter is used as the present filter for tea leaves 2, it is preferable to extract two cups of high concentrated black tea by using the handle 3 of the double type. However, it is needless to say that the handle of the single type may be used as the handle 3.

Further, a suitable amount of a cup of high concentrated black tea extracted by using the present filter for tea leaves 2 is between 30 cc and 45 cc. In other words, as described above, the tea leaves between 7.5 grams and 9 grams expand by pouring boiling water. As a result of this, the tea leaves between 7.5 grams and 9 grams expands to the volume between 27.04 cm³ and 30.00 cm³. And, if tea of 54.08 cc or more, in particular 75.00 cc or more is extracted from the expanding tea leaves, the components such as tannin, acid, protein, and caffeine, or the like containing in the tea are all extracted. For this reason, the extracted tea becomes extracted liquid which has a concentration of nearly 0%. Therefore, a suitable extracted amount of a cup of tea is between 30 cc and 45 cc, preferably between 30 cc and 40 cc. However, the extracted amount of a cup of tea can be arbitrarily adjusted in accordance with the size of a cup, the amount of foamed milk to be poured, or the like.

Here, in case that the amount of black tea leaves is less than 7.5 grams, it is not possible to fill the filter with the tea leaves even when the tea leaves are brewed and expanded sufficiently. As a result of this, gaps are generated between the tea leaves within the filter. For this reason, since the pressure escapes from the gaps, it is difficult to achieve the effect of tamping sufficiently. Consequently, since the color of the extracted tea is light, and the amount of tannin contained in the extracted tea is small, it is difficult to create the latte art.

On the other hand, in case that the amount of black tea leaves is over 9 grams, it is possible to fill the filter with the tea leaves by expanding the tea leaves. But since the filter is filled with the tea leaves too much, the pressure applied by the espresso machine 1 is completely cut off by the tea leaves within the filter 2. As a result of this, there is a risk that the extraction of the tea is prevented. In addition, since the extraction time is long, the contents such as caffeine and tannin in the extracted tea is so much. Therefore, in case that such extracted tea is drunk, there is a risk that someone may feel dizzy. Also, there is a problem that it becomes royal milk tea which astringency remains, even though foamed milk is poured.

Further, known various tea leaves can be used as the tea leaves used in the present filter for tea leaves 2 as long as at least one side (or the diameter) of the tea leaves has a length of 200 µm or more. Here, known various tea leaves include the tea leaves generally distributed. However, in case that the tea leaves are large, it is difficult to maintain the high pressure since gaps are generated between the tea leaves restored to their original state. In addition to this, since the tea leaves are completely clogging the holes 5 of the bottom 4 of the present filter for tea leaves 2, there is a risk that it may difficult to extract the high concentrated tea. Therefore, the size of the tea leaves is preferably between 200 µm and 240 µm. Further, there is the effect that it is possible to use the tea leaves so-called "scraps" in the present filter for tea leaves 2. That is, it is not possible to extract black tea in the manner of infusion (at atmospheric pressure) since the particle size of tea leaves so-called "scraps" is too small. In detail, the tea leaves so-called "scraps" only float in the water. Here, in case that at least one side (or the diameter) of the tea leaves is less than 200 µm, there is the problem that the tea leaves pass through the holes 5 of the present filter for tea leaves 2.

Further, one or more known various tea leaves such as black tea leaves, green tea leaves, Chinese tea leaves, Traditional Chinese Medicine tea leaves, and flavor tea leaves can be used as tea leaves used in the present filter for tea leaves 2.

As mentioned above, in case that the present filter for tea leaves 2 is used in the conventional espresso machine 1, it is possible to extract high concentrated tea by applying high pressure between 8 atmospheres and 12 atmospheres, preferably 9 atmospheres with the same operations as conventional espresso machine 1. As a result, it is possible to create the latte art to the surface of the extracted tea by pouring the foamed milk as in the case of the espresso coffee.

## Claims

1. A filter for tea leaves used in a coffee extractor for extracting coffee by applying pressure higher than atmospheric pressure, whereby
a thickness of a bottom of the filter is between 200 µm and 290 µm; holes which pass extracted liquid are formed to the bottom of the filter so that sum of top openings areas of the holes is between 0.2% and 1% of area of the bottom of the filter;
a topped diameter of the hole is between 170 µm and 210 µm, a bottom diameter of the hole is between 210 µm and 250 µm and a cross-sectional shape of the hole is tapered shape which the topped diameter of the hole is smaller than the bottom diameter of the hole; and
the holes are formed on circumferences of a plurality of concentric circles centering on central point of the bottom of the filter; **characterized in that**
the distances between the adjacent holes formed on circumference of the same concentric circle are the same length, and the larger the radius of the concentric circle becomes, the longer the distance between the adjacent holes becomes.

2. The filter for tea leaves according to Claim 1, wherein a topped inner diameter is between 56 mm and 58 mm; an inner diameter of the bottom is between 20 mm and 34 mm; a depth is between 18 mm and 23 mm; a volume is between 27 cm³ and 30 cm³; and number of the holes is between 280 and 500.

## Patentansprüche

1. Filter für Teeblätter, der in einem Kaffee-Extraktor zum Extrahieren von Kaffee durch Anwenden von Druck höher als der atmosphärische Druck verwendbar ist, wobei
eine Dicke von einem Boden des Filters zwischen 200 µm und 290 µm ist; Löcher, die extrahierte Flüssigkeit durchlassen, in dem Boden des Filters ausgebildet sind, so dass die Summe der oberen Öffnungsbereiche der Löcher zwischen 0,2% und 1% des Bereichs des Bodens von dem Filter ist;
ein oberer Durchmesser von dem Loch zwischen 170 µm und 210 µm ist, ein Bodendurchmesser von dem Loch zwischen 210 µm und 250 µm ist, und eine Querschnittsform von dem Loch eine sich verjüngende Form hat, wobei der obere Durchmesser von dem Loch kleiner ist als der Bodendurchmesser von dem Loch; und
die Löcher auf Kreislinien von einer Vielzahl von konzentrischen Kreisen, die sich in dem Mittelpunkt des Bodens von dem Filter zentrieren, ausgebildet sind; **dadurch gekennzeichnet, dass**
die Abstände zwischen den benachbarten Löchern, die auf der Kreislinie von demselben konzentrischen Kreis ausgebildet sind, die gleiche Länge haben, und je größer der Radius von den konzentrischen Kreisen wird, desto größer wird der Abstand zwischen den benachbarten Löchern.

2. Filter für Teeblätter nach Anspruch 1, bei dem ein oberer Innendurchmesser zwischen 56 mm und 58 mm ist; ein Innendurchmesser von dem Boden zwischen 20 mm und 34 mm ist; eine Tiefe zwischen 18 mm und 23 mm ist; ein Volumen zwischen 27 cm³ und 30 cm³ ist; und die Anzahl der Löcher zwischen 280 und 500 ist.

## Revendications

1. Filtre pour feuilles de thé utilisé dans un extracteur à café destiné à extraire du café par application d'une pression supérieure à la pression atmosphérique, de telle sorte que :
une épaisseur d'une partie inférieure du filtre est comprise entre 200 µm et 290 µm ; des orifices qui laissent passer le liquide extrait sont formés sur la partie inférieure du filtre de telle manière que la somme des surfaces d'ouvertures de partie supérieure des orifices est comprise entre 0,2 % et 1 % de la surface de la partie inférieure du filtre ;
un diamètre de partie supérieure de l'orifice est compris entre 170 µm et 210 µm, un diamètre de partie inférieure de l'orifice est compris entre 210 µm et 250 µm et une forme en section transversale de l'orifice est une forme conique dont le diamètre de partie supérieure de l'orifice est inférieur au diamètre de partie inférieure de l'orifice ; et
les orifices sont formés sur des circonférences d'une pluralité de cercles concentriques centrés sur un point central de la partie inférieure du filtre ; **caractérisé en ce que**
les distances entre les orifices adjacents formés sur la circonférence du même cercle concentrique sont les mêmes longueurs et, plus le rayon du cercle concentrique augmente, plus la distance entre les orifices adjacents augmente.

2. Filtre pour feuilles de thé selon la revendication 1, dans lequel un diamètre interne de partie supérieure est compris entre 56 mm et 58 mm ; un diamètre interne de la partie inférieure est compris entre 20 mm et 34 mm ; une profondeur est comprise entre 18 mm et 23 mm ; un volume est compris entre 27 cm3 et 30 cm3 ; et le nombre d'orifices est compris entre 280 et 500.
